# EUROPÄISCHE PATENTSCHRIFT

(11) **EP 3 669 245 B1**
(45) Veröffentlichungstag und Bekanntmachung des Hinweises auf die Patenterteilung: **08.09.2021**
(21) Anmeldenummer: 18745929.2
(22) Anmeldetag: 25.07.2018
(51) Int. Cl.: G05D 1/02

(54) **VERFAHREN ZUM ERKENNEN EINER POSITION EINES MOBILEN ROBOTERFAHRZEUGS SOWIE ROBOTERFAHRZEUG UND SYSTEM**
METHOD FOR DETECTING A POSITION OF A MOBILE ROBOT VEHICLE, AS WELL AS ROBOT VEHICLE AND SYSTEM
PROCÉDÉ DE RECONNAISSANCE D'UNE POSITION D'UN VÉHICULE-ROBOT MOBILE ET VÉHICULE-ROBOT ET SYSTÈME

(30) Priorität: 17.08.2017 DE 102017214314
(43) Veröffentlichungstag der Anmeldung: 24.06.2020
(73) Patentinhaber: Robert Bosch GmbH, 70442 Stuttgart (DE)
(72) Erfinder: GRAEFENSTEIN, Juergen, 71706 Markgroeningen (DE)
(86) Internationale Anmeldenummer: PCT/EP2018/070171
(87) Internationale Veröffentlichungsnummer: WO 2019/034382

(56) Entgegenhaltungen:
- EP-A1- 1 512 053
- EP-A1- 2 717 110
- DE-A1-102009 027 602
- DE-T2- 69 526 257

## Beschreibung

### Stand der Technik

Die vorliegende Erfindung betrifft ein Verfahren zum Erkennen einer Position eines mobilen, insbesondere autonomen, Roboterfahrzeugs entlang eines, einen definierten Bereich umgebenden, Begrenzungsleiters. Verfahren zum Erkennen einer Position eines mobilen Roboterfahrzeugs relativ zu einem durch einen stromdurchflossenen Begrenzungsleiter definierten Arbeitsbereich wurden bereits vorgeschlagen, beispielsweise in DE 10 2010 028 251 A1, EP 2 741 160 A1 und DE 10 2014 226 077 A1. EP271711 0A1, DE69526257T2, EP1512053A1 und DE102009027602A1 beschreiben andere relevanten Verfahren, in denen die Position eines mobilen autonomen Roboterfahrzeuges entlang einem stromdurchflossenen Bezugsleiter oder relativ zu durch stromdurchflossene Begrenzungsleiter definierten Arbeitsbereichen ermittelt wird.

### Offenbarung der Erfindung

Das erfindungsgemäße Verfahren zum Erkennen einer Position eines mobilen, insbesondere autonomen, Roboterfahrzeugs entlang eines, einen definierten Bereich umgebenden, Begrenzungsleiters, geht von zumindest folgenden Schritten aus:
- Aussenden eines ersten Laufzeitsignals S1 in Form eines auf den Begrenzungsleiter eingespeisten Stromsignals, wobei ein elektromagnetisches Wechselfeld, insbesondere um den Begrenzungsleiter herum, erzeugt wird,
- Detektieren eines Eintreffens des ersten Laufzeitsignals S1 bei dem Roboterfahrzeug, insbesondere in Folge einer Detektion einer von dem Laufzeitsignal S1 hervorgerufenen elektromagnetischen Feldänderung, die auf das erzeugte elektromagnetische Wechselfeld zurückgeht.

Das Verfahren umfasst ferner erfindungsgemäß zumindest die Verfahrensschritte:
- Aussenden eines zweiten Laufzeitsignals S2,
- Detektieren eines Eintreffens des zweiten Laufzeitsignals S2 bei dem Roboterfahrzeug,
- Ermitteln einer Zeitverzögerung zwischen dem Eintreffen des ersten Laufzeitsignals S1 und dem Eintreffen des zweiten Laufzeitsignals S2,
- Ermitteln der Position des Roboterfahrzeugs entlang des Begrenzungsleiters abhängig von der ermittelten Zeitverzögerung.

Unter einem "autonomen Roboterfahrzeug" soll insbesondere ein zumindest teilweise automatisches mobiles Gerät verstanden werden, welches eine Arbeit, bevorzugt eine Bearbeitung einer Fläche (der Bearbeitungsfläche), zumindest teilweise selbsttätig verrichtet. Insbesondere soll das autonome Roboterfahrzeug eine Arbeit selbsttätig beginnen, selbsttätig beenden und/oder selbsttätig zumindest einen Parameter betreffend die Bearbeitung der Bearbeitungsfläche auswählen und/oder beeinflussen. Darüber hinaus soll insbesondere ein Gerät verstanden werden, das sich zumindest zur Verrichtung dieser Arbeit, insbesondere zur Bearbeitung der Bearbeitungsfläche, selbsttätig bewegt und/oder sich vorteilhaft autonom in einem vorgegebenen Bereich, insbesondere dem Arbeitsbereich oder der Bearbeitungsfläche, fortbewegt. Typische Anwendungsgebiete solcher Roboterfahrzeuge umfassen vielfältige Tätigkeiten wie beispielsweise kehren, saugen, reinigen, Rasen mähen, (ein)sammeln, sortieren, bewässern, düngen, kartieren oder dergleichen. Daher können relevante Grundsätze und technische Lehren der im Folgenden zur Veranschaulichung der Vorteile der Erfindung aufgezeigten Ausführungsbeispiele selbstverständlich auf beliebige autonome Roboterfahrzeuge, beispielsweise insbesondere autonome Kehrmaschinen, autonome Reinigungsroboter, autonome Schneeräumroboter, autonome Staubsauger, autonome Schwimmbadreinigungsmaschine, autonome Bodenwischroboter, autonome Rasenmäher, autonome Sähmaschinen, autonome Bewässerungsroboter, autonome Düngemaschinen, autonome Kartierungsmaschinen und dergleichen übertragen werden.

Automatische oder zumindest teilweise automatische mobile Arbeitsgeräte und/oder Roboterfahrzeuge, insbesondere autonome Roboterfahrzeuge wie beispielsweise Bodenbearbeitungsmaschinen, sollen sich in der Regel selbsttätig innerhalb des definierten Bereichs, insbesondere innerhalb des Arbeitsbereichs, bewegen, ohne diesen zu verlassen. Bei der Verwendung von Roboterfahrzeugen im Freien oder in anderen, nicht durch Mauern begrenzten Räumen, kann eine Außengrenze des zu bearbeitenden Arbeitsbereichs vorzugsweise durch einen elektrischen Begrenzungsleiter definiert sein. In dem erfindungsgemäßen Verfahren wird der durch das autonome Roboterfahrzeug zu bearbeitende Bereich (auch Arbeitsbereich) durch einen Begrenzungsleiter eingegrenzt. Der Begrenzungsleiter, typischerweise realisiert in Form eines Drahtes oder Kabels, der die Außengrenze des Bereichs markiert, ist an einen Signalgenerator zur Erzeugung eines Stromes in dem Begrenzungsleiter angeschlossen. Mit Initiieren eines Stromes, insbesondere eines Wechselstromes, in dem Begrenzungsleiter wird ein Stromsignal von dem Signalgenerator auf den Begrenzungsleiter eingespeist, das ein dem Stromsignal korrespondierendes, insbesondere veränderliches, elektromagnetisches Feld in der Umgebung des Begrenzungsleiters erzeugt. Dieses elektromagnetische Feld, vorzugsweise dessen magnetische Komponente, kann durch zumindest eine geeignete Detektoreinheit in dem autonomen Roboterfahrzeug detektiert werden und in ein elektrisches Empfangssignal umgewandelt werden. Vorzugsweise kann eine zeitliche Änderung eines elektromagnetischen Feldes mittels zumindest einer Detektionsspule unter Erzeugung einer durch Änderung der Magnetfeldkomponente induzierten elektrischen Wechselspannung detektiert werden. Das generierte Empfangssignal, insbesondere eine in einer Detektionsspule induzierte Wechselspannung, kann daraufhin verarbeitet und/oder ausgewertet werden, um eine Information über die Position des autonomen Roboterfahrzeugs relativ zu dem Begrenzungsleiter zu erhalten. Insbesondere kann eine solche Information über die Position eine Information darüber sein, ob sich das Roboterfahrzeug innerhalb oder außerhalb des durch den Begrenzungsleiter definierten Bereichs befindet (vgl. beispielsweise DE 10 2014 226 077 A1). Vorteilhaft kann diese Information dazu vorgesehen sein, bei einem Erreichen und/oder einem Überqueren des Begrenzungsleiters eine Funktion des Roboterfahrzeugs auszuführen. Insbesondere kann beispielsweise vorgesehen sein, dass das autonome Roboterfahrzeug seine Fahrtrichtung ändert, um den Arbeitsbereich nicht zu verlassen und/oder eine Bearbeitung des Arbeitsbereichs bei dessen Verlassen beendet wird.

Unter "Erkennen einer Position des Roboterfahrzeugs entlang des Begrenzungsleiters" ist insbesondere zu verstehen, dass die Position des Roboterfahrzeugs in Anwendung des erfindungsgemäßen Verfahrens relativ zum Begrenzungsleiter, insbesondere in einer Dimension entlang des Begrenzungsleiters, bestimmt wird. Insbesondere kann die Position als eine Art der Kilometrierung angesehen werden, entsprechend einer fortlaufenden Meterzählung entlang der durch den Begrenzungsleiters definierten mathematischen Strecke. Beispielsweise kann sich das Roboterfahrzeug bei Position "17 Meter" befinden, wobei der Begrenzungsleiter beispielsweise eine Gesamtlänge von "120 Meter" aufweist. Folglich erlaubt das erfindungsgemäße Verfahren, in Kombination mit aus dem Stand der Technik bekannten Verfahren zur Erkennung einer Position eines mobilen Roboterfahrzeugs relativ zu einem Begrenzungsleiter (d.h. innerhalb oder außerhalb des durch den Begrenzungsleiter definierten Bereichs), eine besonders genaue Erfassung einer aktuellen Position des Roboterfahrzeugs unter Bezugnahme auf den Begrenzungsleiter. Ein Navigationsverfahren des Roboterfahrzeugs kann unter Kenntnis der Position vorteilhaft verbessert werden, sodass eine Befahrung der Bearbeitungsfläche in systematischerer Weise und somit wirtschaftlich besonders vorteilhaft in deutlich kürzerer Zeit und unter Zurücklegung einer kürzeren gesamten Streckenlänge realisiert werden kann.

Unter einem "Laufzeitsignal" ist insbesondere ein physikalisches oder elektrotechnisches Signal zu verstehen, das geeignet ist, von einem Sender, insbesondere einem Signalgenerator, zu einem Empfänger, insbesondere einer Detektoreinheit, kabelgebunden oder kabellos übertragen zu werden. Dabei wird das Laufzeitsignal von dem Sender "ausgesendet". Das Laufzeitsignal soll bei Eintreffen bei dem Empfänger, insbesondere bei der Detektoreinheit, klar registrierbar oder messbar sein und sich gegebenenfalls von einem statistischen Hintergrundrauschen des Empfängers abheben. Insbesondere kann das Eintreffen des Laufzeitsignals bei dem Empfänger, insbesondere bei der Detektoreinheit, mit einem Eintreffzeitpunkt angebbar sein. Insbesondere kann das Eintreffen des Laufzeitsignals bei dem Empfänger, insbesondere bei der Detektoreinheit, ein schaltungstechnisches Ereignis, beispielsweise den Start oder Stopp eines Zeitzählers, triggern.

Das erste Laufzeitsignal S1 wird erfindungsgemäß durch Einspeisen eines Stromsignals auf den Begrenzungsleiter ausgesendet, wobei - wie bereits erläutert - ein elektromagnetisches Wechselfeld insbesondere um den Begrenzungsleiter herum erzeugt wird. Das Eintreffen des ersten Laufzeitsignals bei dem Roboterfahrzeug, insbesondere bei einer Detektoreinheit des Roboterfahrzeugs, wird in Folge einer Detektion einer von dem Laufzeitsignal S1 hervorgerufenen elektromagnetischen Feldänderung, die auf das erzeugte elektromagnetische Wechselfeld um den Begrenzungsleiter zurückgeht, detektiert.

Erfindungsgemäß wird ein zweites Laufzeitsignals S2 ausgesendet und dessen Eintreffen bei dem Roboterfahrzeug detektiert. Aus der Zeitverzögerung zwischen dem Eintreffen des ersten Laufzeitsignals S1 und dem Eintreffen des zweiten Laufzeitsignals S2 kann anschließend, insbesondere mittels einer Steuervorrichtung oder einer Auswertevorrichtung des Roboterfahrzeugs, die Position des Roboterfahrzeugs entlang des Begrenzungsleiters ermittelt werden.

In einer beispielhaften Ausführungsform des erfindungsgemäßen Verfahrens triggert das Eintreffen des Schnelleren (zuerst Eintreffenden) der Laufzeitsignale (S1 oder S2) einen Zeitzähler, der wiederum durch das Eintreffen des Langsameren (zuletzt Eintreffenden) der Laufzeitsignale (S2 bzw. S1) gestoppt wird. Aus dem Wert des Zeitzählers, der der Zeitverzögerung zwischen dem Eintreffen des ersten Laufzeitsignals S1 und dem Eintreffen des zweiten Laufzeitsignals S2 entspricht (oder natürlich auch umgekehrt), kann dann die Position des Roboterfahrzeugs entlang des Begrenzungsleiters ermittelt werden.

In einer Ausführungsform des Verfahrens wird die Position des Roboterfahrzeugs entlang des Begrenzungsleiters ermittelt, indem eine zu der ermittelten Zeitverzögerung in einer Zuordnungstabelle oder in einer "Karte" hinterlegte Position ermittelt, insbesondere ausgelesen, wird. Die Zuordnungstabelle kann dabei geräteintern in einer Datenbank auf einer Speichereinheit, insbesondere einer Speichereinheit einer Auswerteeinheit des Roboterfahrzeugs, gespeichert sein. In einer alternativen oder zusätzlichen Ausführungsform kann die Zuordnungstabelle auch in einer geräteexternen, vorteilhaft stets aktuellen, Referenzdatenbank gespeichert sein, beispielsweise in einer Referenzdatenbank auf einem Computer, einem Server oder auf einem anderen, einem Fachmann sinnvoll erscheinenden Datenspeicher und/oder Datenverarbeitungsgerät. Insbesondere kann der Abgleich der ermittelten Zeitverzögerung mit der Zuordnungstabelle auch über einen Internetzugang des Roboterfahrzeugs erfolgen. Insbesondere wird die Zuordnungstabelle bei einer initialen, insbesondere benutzergeführten, Einlernfahrt des Roboterfahrzeugs bei dessen Initialisierungsphase erstellt. Auf diese Weise können mittels der Einlernfahrt Zeitverzögerungen entlang des Begrenzungsleiters gemessen und in Verbindung mit gemessenen Positionen (beispielsweise gemessen über Odometrie) in der Zuordnungstabelle abgespeichert werden, wodurch eine möglichst fehlerarme Zuordnungstabelle bereitgestellt wird. Die Einlernfahrt kann als eine autonome Fahrt ausgebildet sein, kann alternativ aber auch von Hand geführt sein, wobei zu diesem Zweck das Roboterfahrzeug manuell durch das zu erkundende Gelände geführt wird.

Auf diese Weise kann ein physikalisches Verfahren der Laufzeitmessung (genauer: zweier Laufzeitmessungen) zur indirekten Entfernungsmessung und somit zur Positionsbestimmung des Roboterfahrzeugs entlang des Begrenzungsleiters genutzt werden.

In einer Ausführungsform des Verfahrens wird das zweite Laufzeitsignal S2 unter Verwendung eines weiteren, den definierten Bereich umgebenden, Begrenzungsleiters in Form eines auf den weiteren Begrenzungsleiter eingespeisten weiteren Stromsignals ausgesendet, wobei ein weiteres elektromagnetisches Wechselfeld, insbesondere um den weiteren Begrenzungsleiter herum, erzeugt wird. Insbesondere wird das Eintreffen des zweiten Laufzeitsignals S2 bei dem Roboterfahrzeug in Folge einer Detektion einer von dem zweiten Laufzeitsignal S2 hervorgerufenen weiteren elektromagnetischen Feldänderung detektiert, wobei die hervorgerufene weitere elektromagnetische Feldänderung auf das erzeugte weitere elektromagnetische Wechselfeld zurückgeht. Auf diese Weise kann eine technisch günstige und verlässliche Realisierung des zweiten Laufzeitsignals S2 angegeben werden. Da in dieser Ausführungsform das erste Laufzeitsignal S1 und das zweite Laufzeitsignal S2 technisch ähnlich oder identisch erzeugbar, aussendbar und auch übertragbar sind, kann eine besonders einfache Umsetzung des erfindungsgemäßen Verfahrens angegeben werden. Insbesondere können Laufzeiteffekte, die auf Grund unterschiedlicher Signalübertragungsmedien der Laufzeitsignale verursacht sein können, bei der Ermittlung der Position abhängig von einer ermittelten Zeitverzögerung vernachlässigt werden. In einer Ausführungsform des Verfahrens ist die Umlaufrichtung des auf den Begrenzungsleiter eingespeisten ersten Laufzeitsignals S1 entgegengesetzt zur Umlaufrichtung des auf den weiteren Begrenzungsleiter eingespeisten zweiten Laufzeitsignals S2. Auf diese Weise kann eine besonders genaue Bestimmung der Zeitverzögerung zwischen dem Eintreffen des ersten Laufzeitsignals S1 und dem Eintreffen des zweiten Laufzeitsignals S2 erfolgen und folglich eine besonders genaue Ermittlung der Position des Roboterfahrzeugs entlang des Begrenzungsleiters realisiert werden.

In einer Ausführungsform des Verfahrens wird das erste Laufzeitsignal S1 und/oder das zweite Laufzeitsignal S2 als ein moduliertes Stromsignal erzeugt. Insbesondere mittels zeitlich veränderter, d.h. modulierter, Stromsignale kann eine Laufzeit anhand der Veränderung des modulierten Laufzeitsignals gemessen werden. Dabei ist prinzipiell jede Art von Modulation - Frequenzmodulation, Phasenmodulation und Amplitudenmodulation - geeignet, um das erzeugte elektromagnetische Feld mit "Marken" zu versehen, die nach dem Empfang auf die Laufzeit des entsprechenden Laufzeitsignals von Aussendung bis Empfang zurückschließen lässt.

In einer alternativen oder zusätzlichen Ausführungsform wird das zweite Laufzeitsignal S2 als ein Funksignal ausgesendet, wobei das Eintreffen des zweiten Laufzeitsignals S2 bei dem Roboterfahrzeug insbesondere in Folge einer Detektion einer von dem zweiten Laufzeitsignal S2 hervorgerufenen elektromagnetischen Welle detektiert wird. Auf diese Weise kann insbesondere auf einen weiteren Begrenzungsleiter verzichtet werden, sodass eine besonders einfache, d.h. wenige Zubehörteile umfassende, Realisierung des erfindungsgemäßen Verfahrens angegeben werden kann. Ferner kann eine besonders einfache Installation der zur Ausführung des Verfahrens benötigten Elemente erreicht werden.

In einer Ausführungsform des Verfahrens wird das zweite Laufzeitsignal S2 als ein Dauerstrichradarsignal, insbesondere als ein moduliertes Dauerstrichradarsignal, erzeugt. Insbesondere mittels zeitlich veränderter, d.h. modulierter, Dauerstrichradarsignale kann eine Laufzeit anhand der Veränderung des modulierten Laufzeitsignals gemessen werden. Dabei ist prinzipiell jede Art von Modulation - Frequenzmodulation, Phasenmodulation und Amplitudenmodulation - geeignet, um die ausgesendete elektromagnetische Welle mit Marken zu versehen, die nach dem Empfang auf die Laufzeit des Laufzeitsignals von Aussendung bis Empfang zurückschließen lässt.

Eine Art der Amplitudenmodulation führt zum Impulsradar. In einer Ausführungsform des Verfahrens wird das zweite Laufzeitsignal S2 als ein Impulsradarsignal erzeugt. Unter Verwendung des amplitudenmodulierten Impulsradarsignals kann eine besonders einfache Realisierung des Verfahrens angegeben werden, bei dem lediglich ein Signalanstieg ("Pulse" oder "Peak") detektiert werden muss, um das Eintreffen des zweiten Laufzeitsignals S2 zu bestimmen.

In einer Ausführungsform des Verfahrens wird das zweite Laufzeitsignal S2 als ein frequenzmoduliertes Dauerstrichradarsignal erzeugt. Beispielsweise kann das zweite Laufzeitsignal als ein Dauerstrichradarsignal mit einer Bandbreite von 250 MHz erzeugt werden. Mittels eines frequenzmodulierten Dauerstrichradarsignals kann ein besonders genaues Verfahren realisiert werden, bei dem das Eintreffen des zweiten Laufzeitsignals S2 besonders präzise bestimmt werden kann. Insbesondere im Unterschied zum Impulsradarsignal, bei dem unterschiedlich große Objekte und Objekte unterschiedlicher Reflektivität im Sendepfad (d.h. in dem vom Begrenzungsleiter umgebenden Bereich) den Amplitudenverlauf beeinflussen können - und somit die Ermittlung des Eintreffens des zweiten Laufzeitsignals S2 erschweren können -, können diese Nachteile unter Verwendung eines frequenzmodulierten Dauerstrichradarsignals vermieden werden.

In einer Ausführungsform des Verfahrens werden das erste Laufzeitsignal S1 und das zweite Laufzeitsignal S2 von einem Signalgenerator zur Erzeugung eines Laufzeitsignals erzeugt. Insbesondere kann es sich dabei um denselben Signalgenerator zur Erzeugung des ersten Laufzeitsignals S1 und des zweiten Laufzeitsignals S2 handeln. Auf diese Weise kann eine besonders einfache Realisierung des erfindungsgemäßen Verfahrens angegeben werden. Ferner kann eine genaue zeitliche Abstimmung der Aussendung von erstem Laufzeitsignal S1 und zweitem Laufzeitsignal S2 erfolgen, wenn beide Laufzeitsignale von einem Gerät erzeugt werden. Beispielsweise können das erste Laufzeitsignal S1 und das zweite Laufzeitsignal S2 möglichst zeitsynchron erzeugt und anschließend ausgesendet werden, sodass eine besonders genaue Ermittlung der Position des Roboterfahrzeugs entlang des Begrenzungsleiters ermöglicht wird.

In einer Ausführungsform des Verfahrens werden/wird das erste Laufzeitsignal S1 und/oder das zweite Laufzeitsignal S2 als Sinus-Signalfolge erzeugt. Mittels der Sinus-Signalfolge kann eine besonders einfache Realisierung des Verfahrens angegeben werden, die beispielsweise unter Verwendung eines einfachen Signalgenerators umsetzbar ist. Insbesondere kann eine Frequenz und/oder eine Amplitude der Sinus-Signalfolge derart vorgesehen werden, insbesondere eingestellt werden, dass eine erforderliche Auflösung der Position und/oder eine erforderliche Übertragungsreichweite des ersten Laufzeitsignals S1 und/oder des zweiten Laufzeitsignals S2 erreicht werden kann. Auf diese Weise kann sichergestellt werden, dass das Verfahren zum Erkennen der Position entlang der vollständigen Länge des den definierten Bereich umgebenden Begrenzungsleiters mit hinreichender Genauigkeit durchgeführt werden kann. Insbesondere können die Frequenz und die Amplitude während der Einlernfahrt des Roboterfahrzeugs eingestellt oder einjustiert werden. Ferner kann durch Einstellen der Frequenzen und Amplitude die verbrauchte Leistung und Energie zur Erzeugung des in den Begrenzungsleiter eingespeisten Stromsignals oder des ausgesandten Funksignals angepasst werden.

In einer Ausführungsform des Verfahrens zur Erkennung einer Position des mobilen Roboterfahrzeugs entlang des den definierten Bereich umgebenden Begrenzungsleiters wird in Abhängigkeit der ermittelten Position mindestens eine Funktion bei dem mobilen Roboterfahrzeug ausgelöst. Auf diese Weise wird eine Verknüpfung der Position des Roboterfahrzeugs mit seiner Funktionalität realisiert, die insbesondere hinsichtlich des zu bearbeitenden Bereichs genutzt werden kann. Diverse Ausführungsformen sind denkbar, in denen eine Funktion des Roboterfahrzeugs, insbesondere eine Funktion im Zusammenhang mit dessen Navigation und/oder dessen Ausführung von Arbeiten, entsprechend der ermittelten Position des Roboterfahrzeugs beeinflusst wird. Vielfältige derartige Funktionen sind denkbar und könnten beispielsweise eine Richtungsveränderung, insbesondere eine Richtungsumkehr, bei Erreichen einer vorgegebenen Position entlang des Begrenzungsleiters, ein Ein- oder Ausschalten der Bearbeitung bei Erreichen einer vorgegebenen Position entlang des Begrenzungsleiters, das Aussenden von Informationen abhängig von der Position oder dergleichen realisieren. In einer Ausführungsform wird die Navigation des Roboterfahrzeugs in Abhängigkeit der ermittelten Position zur Erreichung einer vollständigen Abdeckung der gesamten Arbeitsfläche beeinflusst.

In einer Ausführungsform des Verfahrens zur Erkennung einer Position des mobilen Roboterfahrzeugs entlang des den definierten Bereich umgebenden Begrenzungsleiters wird eine Positionsänderung verfolgt, insbesondere wiederholt, insbesondere kontinuierlich oder quasi-kontinuierlich, verfolgt, um bei eventuell auftretenden Sprüngen und/oder Mehrdeutigkeiten bei der Ermittlung der zu einer ermittelten Zeitverzögerung hinterlegten Position eine eindeutige Position identifizieren zu können. Insbesondere wird im Falle einer derartigen Mehrdeutigkeit die konsistente Fortführung der verfolgten Positionsänderung zu Grunde gelegt.

Erfindungsgemäß wird auch ein mobiles, insbesondere autonomes, Roboterfahrzeug vorgeschlagen, das seine Position entlang zumindest eines, einen definierten Bereich umgebenden, Begrenzungsleiters nach dem erfindungsgemäßen Verfahren erkennt und zumindest aufweist:
- eine, insbesondere erste, Detektoreinheit zum Detektieren eines Eintreffens eines ersten Laufzeitsignals S1, insbesondere in Folge einer Detektion einer von dem ersten Laufzeitsignal S1 hervorgerufenen elektromagnetischen Feldänderung, erzeugt durch ein in einem Begrenzungsleiter eingespeistes Stromsignal,
- eine, insbesondere zweite, Detektoreinheit zum Detektieren eines Eintreffens eines zweiten Laufzeitsignals S2,
- eine Auswerteeinheit, die dazu eingerichtet ist, eine Zeitverzögerung zwischen dem Eintreffen des ersten Laufzeitsignals S1 und dem Eintreffen des zweiten Laufzeitsignals S2 zu ermitteln und aus der Zeitverzögerung eine Position entlang des zumindest einen Begrenzungsleiters zu ermitteln.

Die, insbesondere erste, Detektoreinheit ist vorgesehen, Magnetfeldänderungen, die auf das durch das in dem Begrenzungsleiter eingespeiste Stromsignal erzeugte elektromagnetische Feld zurückgehen, zu detektieren und aus diesen detektierten Magnetfeldänderungen ein Empfangssignal zu erzeugen, insbesondere das Eintreffen eines Laufzeitsignals S1, S2 zu bestimmen. Beispielsweise kann mittels einer Detektionsspule eine Magnetfeldänderung in Form einer durch die Magnetfeldänderung induzierten elektrischen Spannung in der Detektionsspule detektiert werden und daraus das Eintreffen eines Laufzeitsignals S1, S2 bestimmt werden. Alternativ und/oder zusätzlich kann eine andere, einem Fachmann als sinnvoll erscheinende Vorrichtung zur Detektion einer Magnetfeldänderung Verwendung finden, beispielsweise Hallsensoren, Feldplatten (Magnetic Dependent Resistor (MDR)), Magnetometer, Kerr-Magnetometer, Protonenmagnetometer, SQUIDs oder dergleichen.

Wie bereits ausgeführt, kann das jeweilige Eintreffen eines Laufzeitsignals S1, S2 als Trigger für einen Zeitzähler des Roboterfahrzeugs - insbesondere als Start- bzw. Stopp-Trigger des Zeitzählers - genutzt werden, sodass auf besonders einfache Weise eine Zeitverzögerung zwischen dem Eintreffen des ersten Laufzeitsignals S1 und dem Eintreffen des zweiten Laufzeitsignals S2 ermittelt werden kann. Die Zeitverzögerung wird wiederum der Auswerteeinheit zur Verfügung gestellt.

Unter der Auswerteeinheit zur Auswertung von von der Detektoreinheit gelieferten Empfangssignalen soll zumindest eine Vorrichtung verstanden werden, die einen Informationseingang zur Annahme der Empfangssignale der Detektoreinheit, eine Informationsverarbeitungseinheit zur Bearbeitung, insbesondere Auswertung der angenommenen Empfangssignale, sowie eine Informationsausgabe zur Weitergabe der bearbeiteten und/oder ausgewerteten Empfangssignale aufweist. Vorteilhaft weist die Auswerteeinheit Komponenten auf, die zumindest einen Prozessor, einen Speicher und ein Betriebsprogramm mit Auswerte- und Berechnungsroutinen umfassen. Insbesondere können die elektronischen Bauteile der Auswerteeinheit auf einer Platine (Leiterplatte) angeordnet sein, bevorzugt auf einer gemeinsamen Platine mit einer Steuervorrichtung, besonders bevorzugt in Form eines Mikrokontrollers. Insbesondere kann die Auswerteeinheit auch als Bestandteil einer Steuervorrichtung des autonomen Roboterfahrzeugs ausgeführt sein. Die Auswerteeinheit ist vorgesehen, aus den von der Detektoreinheit oder von den Detektoreinheiten erhaltenen Signalen zum Empfang eines Laufzeitsignals S1, S2 eine Zeitverzögerung zwischen dem Eintreffen des ersten Laufzeitsignals S1 und dem Eintreffen des zweiten Laufzeitsignals S2 zu ermitteln, beispielsweise unter Verwendung eines Zeitzählers, der mit dem zuerst eintreffenden Laufzeitsignal gestartet und mit dem zuletzt eintreffenden Laufzeitsignal gestoppt wird. Ferner ist die Auswerteeinheit dazu vorgesehen, aus der Zeitverzögerung zumindest eine Erkennung der Position des Roboterfahrzeugs entlang des den Bereich definierenden Begrenzungsleiters durchzuführen.

Das mobile Roboterfahrzeug weist ferner eine Steuervorrichtung zur Ansteuerung der verschiedenen Komponenten des Roboterfahrzeugs auf. Unter der Steuervorrichtung soll insbesondere eine Vorrichtung mit zumindest einer Steuerelektronik verstanden werden, die Mittel zur Kommunikation mit den anderen Komponenten des Roboterfahrzeugs, beispielsweise Mittel zur Steuerung und Regelung der zumindest einen Detektoreinheit, der Auswerteeinheit, einer Antriebseinheit, und/oder Mittel zur Datenverarbeitung und/oder weitere, dem Fachmann als sinnvoll erscheinende Mittel aufweist. Insbesondere ist die Steuervorrichtung dazu vorgesehen, zumindest einen Betriebsfunktionsparameter des Roboterfahrzeugs, insbesondere betreffend einer Navigation und/oder einer Bewegung des Roboterfahrzeugs, in Abhängigkeit von zumindest einer detektierten Signalgröße und/oder einem Auswerteergebnis der Auswerteeinheit einzustellen. Vorteilhaft kann unter der Steuerelektronik der erfindungsgemäßen Steuervorrichtung eine Prozessoreinheit in Verbindung mit einer Speichereinheit sowie mit einem in der Speichereinheit gespeicherten Betriebsprogramm verstanden werden, das während des Steuervorgangs ausgeführt wird. Insbesondere können die elektronischen Bauteile der Steuervorrichtung auf einer Platine (Leiterplatte) angeordnet sein, bevorzugt in Form eines Mikrokontrollers. Besonders vorteilhaft kann die Steuervorrichtung darüber hinaus dazu vorgesehen sein, das gesamte Roboterfahrzeug zu steuern und dessen Betrieb zu ermöglichen. Dazu ist die Steuervorrichtung vorgesehen, mit den anderen Komponenten des Roboterfahrzeugs, insbesondere der Detektoreinheit, der Auswerteeinheit, der Antriebseinheit, einer Speichereinheit, einer Datenkommunikationsschnittstelle und dergleichen, zu kommunizieren.

Es sei angemerkt, dass die, insbesondere erste, Detektoreinheit und die, insbesondere zweite, Detektoreinheit als identische (d.h. eine einzige) Detektoreinheit realisiert sein kann. Alternativ können die, insbesondere erste, Detektoreinheit und die, insbesondere zweite, Detektoreinheit tatsächlich als verschiedene, d.h. als erste Detektoreinheit und als zweite Detektoreinheit, realisiert sein.

In einer Ausführungsform des mobilen Roboterfahrzeug ist die, insbesondere zweite, Detektoreinheit zum Detektieren des Eintreffens des zweiten Laufzeitsignals S2 in Folge einer Detektion einer von dem zweiten Laufzeitsignal S2 hervorgerufenen elektromagnetischen Feldänderung, erzeugt durch ein in einem Begrenzungsleiter eingespeistes Stromsignal, vorgesehen. In einer alternativen Ausführungsform des mobilen Roboterfahrzeug ist die, insbesondere zweite, Detektoreinheit zum Detektieren des Eintreffens des zweiten Laufzeitsignals S2 in Folge einer Detektion einer von dem zweiten Laufzeitsignal S2 hervorgerufenen elektromagnetischen Welle, erzeugt durch ein Funksignal, vorgesehen.

Ferner wird ein mobiles, insbesondere autonomes, Roboterfahrzeug, vorgeschlagen, das seine Position entlang zumindest eines, einen definierten Bereich umgebenden, Begrenzungsleiters nach dem erfindungsgemäßen Verfahren erkennt und zumindest aufweisend:
- eine Detektoreinheit zum Detektieren eines überlagerten Mischsignals aus einem ersten Laufzeitsignals S1 und einem zweiten Laufzeitsignal S2, insbesondere in Folge einer Detektion einer von dem ersten Laufzeitsignal S1 und dem zweiten Laufzeitsignal S2 hervorgerufenen überlagerten elektromagnetischen Feldänderung, erzeugt durch jeweils ein in einem Begrenzungsleiter eingespeistes Stromsignal,
- eine Auswerteeinheit, die dazu eingerichtet ist, aus dem überlagerten Mischsignal eine Zeitverzögerung zwischen den Laufzeitsignalen S1 und S2, insbesondere zwischen dem Eintreffen des ersten Laufzeitsignals S1 und dem Eintreffen des zweiten Laufzeitsignals S2, zu ermitteln und aus der Zeitverzögerung eine Position entlang des zumindest einen Begrenzungsleiters zu ermitteln.

Ferner wird ein erfindungsgemäßes System zur Durchführung des erfindungsgemäßen Verfahrens, insbesondere zum Erkennen einer Position eines Roboterfahrzeugs entlang eines einen definierten Bereich umgebenden Begrenzungsleiters, vorgeschlagen, das zumindest umfasst:
- einen Begrenzungsleiter,
- ein erfindungsgemäßes mobiles Roboterfahrzeug,
- zumindest einen Signalgenerator zur Erzeugung eines ersten Laufzeitsignals S1 sowie zur Erzeugung eines zweiten Laufzeitsignals S2.

In einer Ausführungsform des System ist der Signalgenerator dazu vorgesehen, das erste Laufzeitsignal S1 durch Einspeisen eines Stromsignals auf den Begrenzungsleiter auszusenden und das zweite Laufzeitsignal S2 durch Einspeisen eines weiteren Stromsignals auf einen weiteren, den definierten Bereich umgebenden, Begrenzungsleiter auszusenden. In einer alternativen Ausführungsform des Systems ist der Signalgenerator dazu vorgesehen, das erste Laufzeitsignal S1 durch Einspeisen eines Stromsignals auf den Begrenzungsleiter auszusenden und das zweite Laufzeitsignal S2 als ein Funksignal auszusenden.

Insbesondere kann der Signalgenerator einen Begrenzungssignalgenerator sowie einen Stromgenerator umfassen bzw. als eine Kombination solcher ausgebildet sein.

Es sei abschließend erwähnt, dass mit "das erste Laufzeitsignal" und das "zweite Laufzeitsignal" keine zeitliche Vorgabe oder Reihenfolge impliziert ist. Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine schematische Darstellung einer Ausführungsform eines erfindungsgemäßen Systems bestehend aus zwei Begrenzungsleitern, mobilem Roboterfahrzeug und Signalgenerator;
- Figur 2: eine schematische Darstellung einer alternativen Ausführungsform eines erfindungsgemäßen Systems bestehend aus einem Begrenzungsleiter, mobilem Roboterfahrzeug und Signalgenerator;
- Figur 3: eine perspektivische Darstellung einer Ausgestaltung eines erfindungsgemäßen mobilen Roboterfahrzeugs;
- Figur 4: eine perspektivische Darstellung einer alternativen Ausgestaltung eines erfindungsgemäßen mobilen Roboterfahrzeugs;
- Figur 5: ein Verfahrensdiagramm zu einer exemplarischen Ausführungsform des erfindungsgemäßen Verfahrens zum Erkennen einer Position eines mobilen Roboterfahrzeugs entlang eines Begrenzungsleiters.

### Beschreibung der Ausführungsbeispiele

Das erfindungsgemäße Verfahren und ein erfindungsgemäßer Gegenstand betreffen im allgemeinen mobile Roboterfahrzeuge, die dazu ausgelegt sind, ihre Position entlang eines einen definierten Bereich umgebenden Begrenzungsleiters zu bestimmen. Insbesondere können diese mobilen Roboterfahrzeuge zur Verrichtung von Arbeiten und/oder Überwachungsaufgaben vorgesehen sein. Beispiele solcher mobilen Roboterfahrzeuge stellen automatische oder halbautomatische Arbeitsgeräte dar, die geeignet sind, eine Bodenbearbeitung in einem bestimmten Bereich durchzuführen, wie beispielsweise Rasen mähen, Rasen vertikutieren, Laub sammeln, bewässern, düngen, Schnee räumen, Staub saugen, Boden wischen, Boden waschen, Boden polieren und dergleichen.

Die folgende Beschreibung der Ausführungsbeispiele der Erfindung bezieht sich auf ein automatisches, autonomes mobiles Roboterfahrzeug, insbesondere einen Rasenmähroboter, wobei die Erfindung nicht auf ein solches System beschränkt ist.

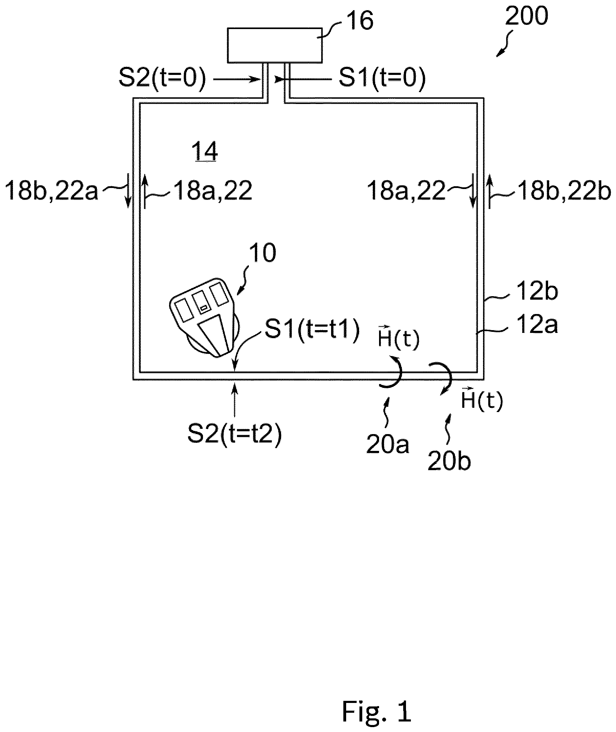

Figur 1 zeigt ein mögliches Ausführungsbeispiel eines erfindungsgemäßen Systems 200 bestehend aus einem mobilen Roboterfahrzeug 10, das sich innerhalb eines durch einen Begrenzungsleiter 12a definierten Bereichs 14, insbesondere innerhalb eines Arbeitsbereichs, befindet. Der Begrenzungsleiter 12a ist als Draht in Form einer Leiterschleife ausgebildet, sodass in seinem Inneren ein Bereich 14, den das mobile Roboterfahrzeug 10 nicht verlassen soll, insbesondere ein durch das Roboterfahrzeug 10 zu bearbeitender Arbeitsbereich, definiert ist. In einer Ausführungsform kann der Begrenzungsleiter 12a in den Boden eingelassen oder unmittelbar darauf ausgelegt und/oder angebracht sein. Ferner ist der definierte Bereich 14 durch einen weiteren (hier: zweiten) Begrenzungsleiter 12b umgeben. In dem dargestellten Ausführungsbeispiel verlaufen der Begrenzungsleiter 12a und der weitere Begrenzungsleiter 12b im Wesentlichen parallel zueinander um den definierten Bereich 14 herum. In einer Ausführungsform kann auch der weitere Begrenzungsleiter 12b in den Boden eingelassen oder unmittelbar darauf ausgelegt und/oder angebracht sein.

Erreicht das mobile Roboterfahrzeug 10 den Begrenzungsleiter 12a und/oder den weitere Begrenzungsleiter 12b, ist vorgesehen, dass eine Funktion in dem autonomen Roboterfahrzeug 10 ausgeführt wird. Diese Funktion kann beispielsweise eine Fahrtrichtungsänderung, insbesondere eine Fahrtrichtungsumkehr, eine Änderung von Parametern betreffend eine Bearbeitung des befahrenen Bereichs 14, eine Notstoppfunktion oder dergleichen sein.

Der Begrenzungsleiter 12a und der weitere Begrenzungsleiter 12b sind mit einem Signalgenerator 16 zur Erzeugung eines elektrischen Stroms 18a in dem Begrenzungsleiter 12a sowie zur Erzeugung eines elektrischen Stroms 18b in dem weitere Begrenzungsleiter 12b verbunden. Der jeweilige Stromfluss in einem Begrenzungsleiter 12a,12b, insbesondere ein auf einen Begrenzungsleiter 12a,12b eingespeistes Stromsignal, bewirkt, dass sich um den jeweiligen Begrenzungsleiter 12a,12b herum ein zeitlich veränderliches elektromagnetisches Feld 20a,20b ausbildet, wobei die Stärke und Richtung der magnetischen Feldkomponente von der Stromstärke und Fließrichtung (entsprechend Umlaufrichtung 22a,22b) des in den jeweiligen Begrenzungsleiter 12a,12b eingespeisten Stroms 18a,18b abhängt. Insbesondere resultiert folglich ein dem in den jeweiligen Begrenzungsleiter 12a,12b eingespeisten Strom 18a,18b, insbesondere ein dem in den jeweiligen Begrenzungsleiter 12a,12b eingespeisten Stromsignal, korrespondierendes elektromagnetisches Feld 20a,20b mit einer magnetischen Feldkomponente.

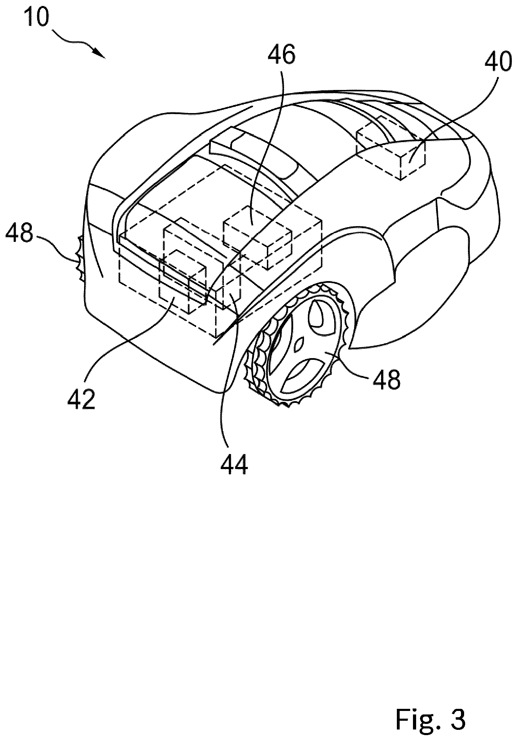

Der Signalgenerator 16 ist in dem in Figur 1 dargestellten Ausführungsbeispiel des Systems 200 zur Erzeugung eines ersten Laufzeitsignals S1 vorgesehen. Das erste Laufzeitsignal S1 wird durch Einspeisen eines Stromsignals auf den Begrenzungsleiter 12a ausgesendet. Ferner ist der Signalgenerator 16 zur Erzeugung eines zweiten Laufzeitsignals S2 vorgesehen. Das zweite Laufzeitsignal S2 wird durch Einspeisen eines weiteren Stromsignals auf den Begrenzungsleiter 12b ausgesendet. In dem dargestellten Ausführungsbeispiel ist das erste Laufzeitsignal S1 als ein auf den Begrenzungsleiter 12a eingespeistes, amplituden- und/oder frequenzmoduliertes Stromsignal realisiert, sodass das resultierende Laufzeitsignal S1 auf Grund des in den Begrenzungsleiter 12a eingespeisten Stromsignals entsprechender Modulationseigenschaft eindeutig definiert und detektierbar ist (vgl. Ausführung zu Figur 3). Ferner ist das zweite Laufzeitsignal S2 als ein auf den weiteren Begrenzungsleiter 12b eingespeistes, amplituden- und/oder frequenzmoduliertes Stromsignal realisiert, sodass das resultierende Laufzeitsignal S2 auf Grund des in den Begrenzungsleiter 12b eingespeisten Stromsignals entsprechender Modulationseigenschaft ebenfalls eindeutig definiert und detektierbar ist (vgl. Ausführung zu Figur 3). Insbesondere wird das auf den Begrenzungsleiter 12a eingespeiste erste Laufzeitsignal S1 mit einer Umlaufrichtung 22a entgegengesetzt zur Umlaufrichtung 22b des auf den weiteren Begrenzungsleiter 12b eingespeisten zweiten Laufzeitsignals S2 eingespeist. Auf diese Weise wird kann, insbesondere hinsichtlich der zwei nahe beieinander befindlichen Drahtleitungen des Begrenzungsleiters 12a und des weiteren Begrenzungsleiters 12b, eine Interferenz der Laufzeitsignale reduziert sein.

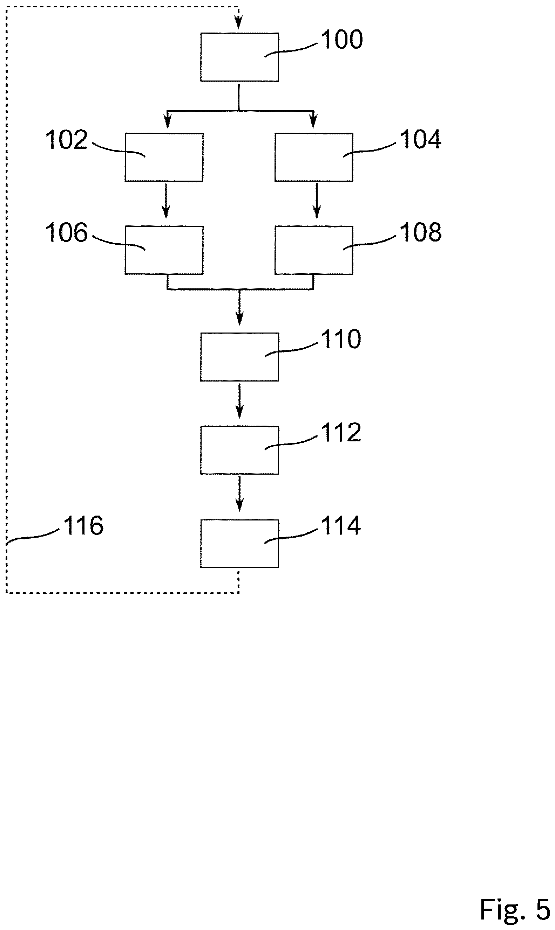

Das in Figur 1 dargestellte System 200 dient der Ausführung des in Figur 5 dargestellten erfindungsgemäßen Verfahrens zum Erkennen einer Position des mobilen Roboterfahrzeugs 10 entlang des Begrenzungsleiters 12a (oder hier auch 12b).

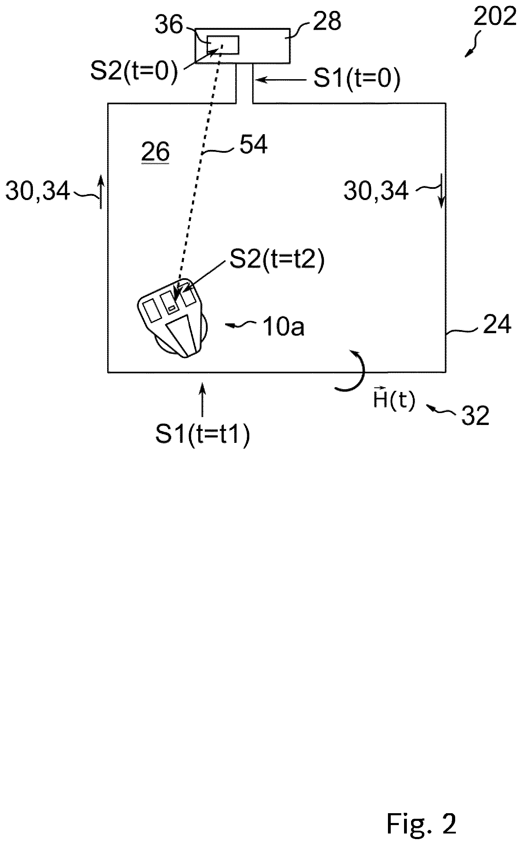

Figur 2 zeigt ein alternatives Ausführungsbeispiel eines erfindungsgemäßen Systems 202 bestehend aus einem mobilen Roboterfahrzeug 10a, das sich innerhalb eines durch einen Begrenzungsleiter 24 definierten Bereichs 26, insbesondere innerhalb eines Arbeitsbereichs, befindet. Der Begrenzungsleiter 24 ist ebenfalls als Draht in Form einer Leiterschleife ausgebildet, sodass in seinem Inneren ein Bereich 26, den das mobile Roboterfahrzeug 10a nicht verlassen soll, definiert ist. Der Begrenzungsleiter 24 kann dabei in den Boden eingelassen oder unmittelbar darauf ausgelegt und/oder angebracht sein.

Der Begrenzungsleiter 24 ist mit einem Signalgenerator 28 zur Erzeugung eines elektrischen Stroms 30 in dem Begrenzungsleiter 24 verbunden. Der Stromfluss in dem Begrenzungsleiter 24, insbesondere ein auf den Begrenzungsleiter 24 eingespeistes Stromsignal, bewirkt, dass sich um den Begrenzungsleiter 24 herum ein zeitlich veränderliches elektromagnetisches Feld 32 ausbildet, wobei die Stärke und Richtung der magnetischen Feldkomponente von der Stromstärke und Fließrichtung 34 des in den Begrenzungsleiter 24 eingespeisten Stroms 30 abhängt. Insbesondere resultiert folglich ein dem in den Begrenzungsleiter 24 eingespeisten Strom 30, insbesondere ein dem in den Begrenzungsleiter 24 eingespeisten Stromsignal, korrespondierendes elektromagnetisches Feld 32 mit einer magnetischen Feldkomponente.

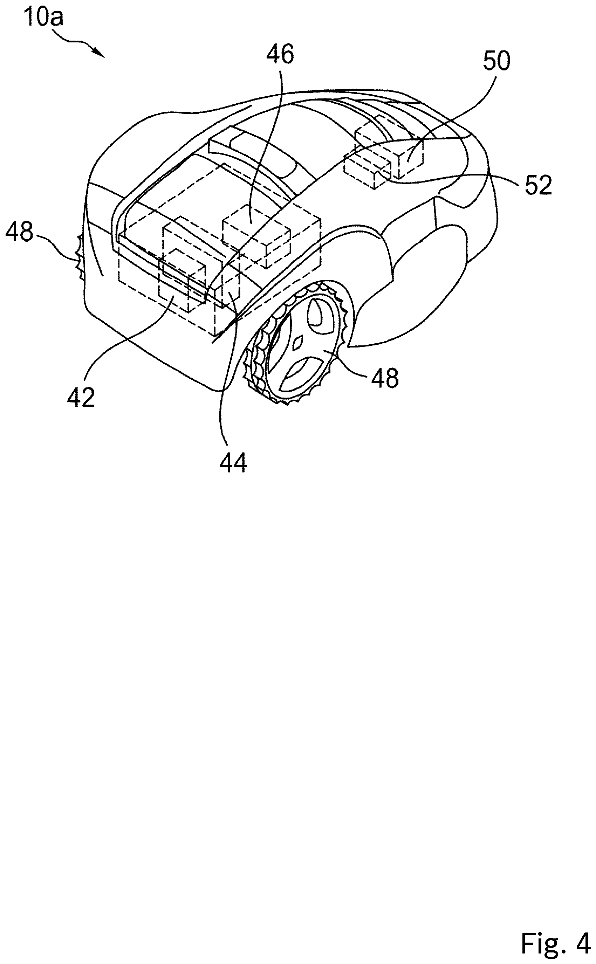

Der Signalgenerator 28 ist in dem in Figur 2 dargestellten Ausführungsbeispiel des Systems 202 zur Erzeugung eines ersten Laufzeitsignals S1 vorgesehen. Das erste Laufzeitsignal S1 wird durch Einspeisen eines Stromsignals auf den Begrenzungsleiter 24 ausgesendet. In dem dargestellten Ausführungsbeispiel ist das erste Laufzeitsignal S1 als ein auf den Begrenzungsleiter 24 eingespeistes, amplituden- und/oder frequenzmoduliertes Stromsignal realisiert, sodass das resultierende Laufzeitsignal S1 auf Grund des in den Begrenzungsleiter 24 eingespeisten Stromsignals entsprechender Modulationseigenschaft eindeutig definiert und detektierbar ist (vgl. Ausführung zu Figur 4). Ferner ist der Signalgenerator 28 zur Erzeugung eines zweiten Laufzeitsignals S2 vorgesehen, wobei das zweite Laufzeitsignal S2 eine feste, insbesondere konstante, bevorzugt eine verschwindende, Phasenverschiebung bezüglich des ersten Laufzeitsignals S1 aufweist. Das zweite Laufzeitsignal S2 wird von dem Signalgenerator 28 unter Verwendung einer Antenne 36, insbesondere einer Radarantenne, als ein Funksignal 54 ausgesendet.

Insbesondere kann der Signalgenerator 28 unter Verwendung der Antenne 36 dazu vorgesehen sein, das zweite Laufzeitsignal S2 als ein Dauerstrichradarsignal, insbesondere als ein frequenzmoduliertes Dauerstrichradarsignal, zu erzeugen und auszusenden. Alternativ oder zusätzlich kann der Signalgenerator 28 unter Verwendung der Antenne 36 dazu vorgesehen sein, das zweite Laufzeitsignal S2 als Impulsradarsignal zu erzeugen und auszusenden.

Das in Figur 2 dargestellte System 202 dient der Ausführung des in Figur 5 dargestellten erfindungsgemäßen Verfahrens zum Erkennen einer Position des mobilen Roboterfahrzeugs 10a entlang des Begrenzungsleiters 24.

Ferner können in den in Figuren 1 und 2 dargestellten Ausführungsbeispielen das erste Laufzeitsignal S1 und/oder das zweite Laufzeitsignal S2 als Sinus-Signalfolge(n) erzeugt werden.

Das in der Figur 1 schematisch und in Figur 3 in einer perspektivischen Ansicht ausführlicher dargestellte Roboterfahrzeug 10 weist, insbesondere der autonome Rasenmäher, weist eine Detektoreinheit 40 zum Detektieren eines Eintreffens des ersten Laufzeitsignals S1 auf, wobei das Eintreffen des Laufzeitsignals S1 in Folge einer Detektion einer von dem ersten Laufzeitsignal S1 hervorgerufenen elektromagnetischen Feldänderung (Änderung von H) erfolgt. Die Detektoreinheit 40 des Roboterfahrzeugs 10 bildet gleichzeitig eine Detektoreinheit 40 zum Detektieren eines Eintreffens des zweiten Laufzeitsignals S2. Insbesondere ist die Detektoreinheit 40 zum Detektieren eines überlagerten Mischsignals aus dem ersten Laufzeitsignal S1 und dem zweiten Laufzeitsignal S2, insbesondere in Folge einer Detektion einer von dem ersten Laufzeitsignal S1 und dem zweiten Laufzeitsignal S2 hervorgerufenen überlagerten elektromagnetischen Feldänderung, vorgesehen. Somit kann die Detektoreinheit 40 sowohl Laufzeitsignale S1,S2 detektieren, die als Einzelpulse auf den jeweiligen Begrenzungsleiter 12a,12b eingespeist werden, als auch überlagerte Mischsignal der Laufzeitsignale S1,S2. Die Detektoreinheit 40 ist in dem dargestellten Ausführungsbeispiel unter Implementierung zumindest einer Induktionsspule gebildet, in der ein insbesondere zeitlich veränderliches elektromagnetisches Feld 20a,20b, insbesondere dessen zeitlich veränderliche magnetische Komponente, eine elektrische Spannung induziert. Diese induzierte Spannung wird als Empfangssignal (nicht näher dargestellt) von der Detektoreinheit 40 ausgegeben und vorteilhaft an eine Auswerteeinheit 42 des Roboterfahrzeugs 10 weitergeleitet. Somit ist die Detektoreinheit 40 zur Detektion eines um einen jeweiligen Begrenzungsleiter 12a,12b erzeugten elektromagnetischen Felds 20a,20b, insbesondere dessen magnetische Komponente und deren Richtung, vorgesehen.

Die Auswerteeinheit 42 zur Auswertung von von der Detektoreinheit 40 gelieferten Empfangssignalen analysiert das von der Detektoreinheit 40 zugeleitete Empfangssignal. Die Auswerteeinheit 42 detektiert unter Verwendung des Empfangssignals das Eintreffen des ersten Laufzeitsignals S1 und des zweiten Laufzeitsignals S2. Die Auswerteeinheit 42 ist dazu eingerichtet, eine Zeitverzögerung zwischen dem Eintreffen des ersten Laufzeitsignals S1 - hier in Figur 1 bezeichnet mit S1(t=t1) - und dem Eintreffen des zweiten Laufzeitsignals S2 - bezeichnet mit S2(t=t2) - bei dem Roboterfahrzeug 10 zu ermitteln und aus der Zeitverzögerung (d.h. t2-t1; allerdings müssen keine absoluten Zeiten t1, t2 ermittelt werden) eine Position entlang des zumindest einen Begrenzungsleiters 12a,12b zu ermitteln. Alternativ oder zusätzlich ist die Auswerteeinheit 42 dazu eingerichtet, aus dem überlagerten Mischsignal eine Zeitverzögerung (t2-t1) zwischen den Laufzeitsignalen S1 und S2, insbesondere zwischen einem Eintreffen des ersten Laufzeitsignals S1 und einem Eintreffen des zweiten Laufzeitsignals S2, zu ermitteln und aus der Zeitverzögerung (t2-t1) eine Position entlang zumindest eines der Begrenzungsleiter 12a,12b zu ermitteln. Dazu ermittelt die Auswerteeinheit 42 über eine geräteintern hinterlegte Zuordnungstabelle eine zu einer ermittelten Zeitverzögerung hinterlegte Position des Roboterfahrzeugs 10 entlang zumindest eines der Begrenzungsleiter 12a,12b. Die Position ist dabei als eine Entfernung des Roboterfahrzeugs 10 zu dem Signalgenerator 16 definiert (in einer von der Auswerteeinheit definierten Umlaufrichtung), wobei die Entfernung entlang eines der Begrenzungsleiter 12a,12b gemessen, insbesondere kilometriert, ist.

Die Auswerteeinheit 42 rekonstruiert auf diese Weise eine Position des Roboterfahrzeugs 10 entlang eines der beiden Begrenzungsleiter 12a,12b und stellt diese zur weiteren Verarbeitung zur Verfügung, insbesondere der Steuervorrichtung 44 und/oder einer Navigationsvorrichtung des Roboterfahrzeugs 10 zur Verfügung. Zur Durchführung von Berechnungen weist die Auswerteeinheit 42 zumindest eine Prozessoreinheit, eine Speichereinheit sowie ein in der Speichereinheit gespeichertes Betriebsprogramm, das während einer Auswertung ausgeführt wird, auf.

Es sei angemerkt, dass in einem alternativen Ausführungsbeispiel (hier nicht näher dargestellt) das Roboterfahrzeug 10 eine zweite, insbesondere eine zweite von der ersten Detektoreinheit 40 separate, Detektoreinheit zum Detektieren des Eintreffens des zweiten Laufzeitsignals S2 in Folge einer Detektion einer von dem zweiten Laufzeitsignal S2 hervorgerufenen elektromagnetischen Feldänderung aufweisen kann.

Das mobile Roboterfahrzeug 10 weist des Weiteren eine Steuervorrichtung 44 zur Ansteuerung der verschiedenen Komponenten des Roboterfahrzeugs 10 auf, zumindest zur Ansteuerung der Detektoreinheit 40, der Auswerteeinheit 42 und einer Antriebseinheit 46. Ferner ist die Steuervorrichtung 44 vorgesehen, eine Richtungsänderung des Roboterfahrzeugs 10 in Abhängigkeit der erkannten Position des Roboterfahrzeugs 10, d.h. insbesondere in Abhängigkeit eines Auswerteergebnisses der Auswerteeinheit 42, einzustellen. Die Steuerelektronik der Steuervorrichtung 44 umfasst zumindest eine Prozessoreinheit, eine Speichereinheit sowie ein in der Speichereinheit gespeichertes Betriebsprogramm, das während des Steuervorgangs ausgeführt wird. Insbesondere können in einem Ausführungsbeispiel des Roboterfahrzeugs 10 die Auswerteeinheit 42 und die Steuervorrichtung 44 als ein gemeinsames Bauteil, insbesondere als eine gemeinsame Prozessoreinheit samt Speichereinheit und Betriebsprogramm realisiert sein.

Das autonome Roboterfahrzeug 10 weist ferner eine Antriebseinheit 46 auf, die vorgesehen ist, von der Steuervorrichtung 44 Steuersignale anzunehmen und basierend auf diesen Steuersignalen eine Bewegung des Roboterfahrzeugs 10 durchzuführen. Insbesondere weist die Antriebseinheit 46 zumindest einen Motor sowie Räder 48 auf, unter deren Verwendung sich das Roboterfahrzeug 10 über den Bereich 14 bewegt.

Eine Energieversorgungsvorrichtung (nicht näher dargestellt) dient der Energieversorgung des autonomen Roboterfahrzeugs 10.

Das in Figur 2 schematisch und in Figur 4 in einer perspektivischen Ansicht ausführlicher dargestellte Roboterfahrzeug 10a, insbesondere der autonome Rasenmäher, weist eine erste Detektoreinheit 50 zum Detektieren eines Eintreffens des ersten Laufzeitsignals S1 auf, wobei das Eintreffen des Laufzeitsignals S1 in Folge einer Detektion einer von dem ersten Laufzeitsignal S1 hervorgerufenen elektromagnetischen Feldänderung (Änderung von H) erfolgt. Die erste Detektoreinheit 50 ist in dem dargestellten Ausführungsbeispiel unter Implementierung zumindest einer Induktionsspule gebildet, in der ein insbesondere zeitlich veränderliches elektromagnetisches Feld 32, insbesondere dessen zeitlich veränderliche magnetische Komponente, eine elektrische Spannung induziert. Diese induzierte Spannung wird als Empfangssignal (nicht näher dargestellt) von der ersten Detektoreinheit 50 ausgegeben und vorteilhaft an eine Auswerteeinheit 42 des Roboterfahrzeugs 10a weitergeleitet. Somit ist die erste Detektoreinheit 50 zur Detektion eines um den Begrenzungsleiter 24 erzeugten elektromagnetischen Felds 32, insbesondere dessen magnetische Komponente und deren Richtung, vorgesehen. Das Roboterfahrzeug 10a weist ferner eine zweite Detektoreinheit 52 zum Detektieren des Eintreffens des zweiten Laufzeitsignals S2 in Folge einer Detektion einer von dem zweiten Laufzeitsignal S2 hervorgerufenen elektromagnetischen Welle, erzeugt durch ein mittels der Antenne 36 ausgesendetes Funksignal 54, auf. Die zweite Detektoreinheit 52 ist dabei als ein Funkempfänger, insbesondere als ein Radarempfänger oder als eine Antenne, realisiert und zum Empfang eines von dem Signalgenerator 28 ausgesendeten Funksignals 54 ausgebildet.

Die Auswerteeinheit 42 zur Auswertung von von der ersten Detektoreinheit 50 und von von der zweiten Detektoreinheit 52 gelieferten Empfangssignalen analysiert die jeweiligen bereitgestellten Empfangssignale. Die Auswerteeinheit 42 detektiert unter Verwendung der Empfangssignale das Eintreffen des ersten Laufzeitsignals S1 und des zweiten Laufzeitsignals S2. Die Auswerteeinheit 42 ist dazu eingerichtet, eine Zeitverzögerung zwischen dem Eintreffen des ersten Laufzeitsignals S1 - hier in Figur 2 bezeichnet mit S1(t=t1) - und dem Eintreffen des zweiten Laufzeitsignals S2 - bezeichnet mit S2(t=t2) - bei dem Roboterfahrzeug 10a zu ermitteln und aus der Zeitverzögerung (d.h. t2-t1; allerdings müssen keine absoluten Zeiten t1, t2 ermittelt werden) eine Position entlang des zumindest einen Begrenzungsleiters zu ermitteln. Dazu ermittelt die Auswerteeinheit 42 über eine geräteintern hinterlegte Zuordnungstabelle eine zu einer ermittelten Zeitverzögerung hinterlegte Position des Roboterfahrzeugs 10a entlang des Begrenzungsleiters 24. Die Position ist dabei als eine Entfernung des Roboterfahrzeugs 10a zu dem Signalgenerator 28 definiert (in einer von der Auswerteeinheit definierten Umlaufrichtung), wobei die Entfernung entlang eines der Begrenzungsleiters 24 gemessen, insbesondere kilometriert, ist.

Die Auswerteeinheit 42 rekonstruiert somit auch in dem in Figur 4 dargestellten Roboterfahrzeug 10a eine Position des Roboterfahrzeugs 10a entlang des Begrenzungsleiters 24 und stellt diese Position zur weiteren Verarbeitung zur Verfügung, insbesondere der Steuervorrichtung 44 und/oder einer Navigationsvorrichtung des Roboterfahrzeugs 10a zur Verfügung. Zur Durchführung von Berechnungen weist die Auswerteeinheit 42 zumindest eine Prozessoreinheit, eine Speichereinheit sowie ein in der Speichereinheit gespeichertes Betriebsprogramm, das während einer Auswertung ausgeführt wird, auf. Die Steuervorrichtung 44 dient auch in diesem Ausführungsbeispiel zur Ansteuerung der verschiedenen Komponenten des Roboterfahrzeugs 10a, zumindest zur Ansteuerung der ersten Detektoreinheit 50, der zweiten Detektoreinheit 52, der Auswerteeinheit 42 und einer Antriebseinheit 46. Ferner ist die Steuervorrichtung 44 vorgesehen, eine Richtungsänderung des Roboterfahrzeugs 10a in Abhängigkeit der erkannten Position des Roboterfahrzeugs 10a, d.h. insbesondere in Abhängigkeit eines Auswerteergebnisses der Auswerteeinheit 42, einzustellen. Die Steuerelektronik der Steuervorrichtung 44 umfasst zumindest eine Prozessoreinheit, eine Speichereinheit sowie ein in der Speichereinheit gespeichertes Betriebsprogramm, das während des Steuervorgangs ausgeführt wird. Insbesondere können in einem Ausführungsbeispiel des Roboterfahrzeugs 10a die Auswerteeinheit 42 und die Steuervorrichtung 44 als ein gemeinsames Bauteil, insbesondere als eine gemeinsame Prozessoreinheit samt Speichereinheit und Betriebsprogramm realisiert sein.

Das in Figur 4 dargestellte autonome Roboterfahrzeug 10a weist ebenfalls eine Antriebseinheit 46 auf, die vorgesehen ist, von der Steuervorrichtung 44 Steuersignale anzunehmen und basierend auf diesen Steuersignalen eine Bewegung des Roboterfahrzeugs 10a durchzuführen. Insbesondere weist die Antriebseinheit 46 zumindest einen Motor sowie Räder 48 auf, unter deren Verwendung sich das Roboterfahrzeug 10a über den Bereich 26 bewegt.

Eine Energieversorgungsvorrichtung (nicht näher dargestellt) dient der Energieversorgung des autonomen Roboterfahrzeugs 10a.

Das Verfahren zum Erkennen der Position des Roboterfahrzeugs 10,10a entlang eines einen Bereich 14,26 umgebenden Begrenzungsleiters 12a,12b,24 wird nachfolgend in Verbindung mit dem Verfahrensdiagramm der Figur 5 beschrieben. Die Durchführung des beschriebenen Verfahrens ist mit den in Figur 1 und Figur 2 dargestellten Systemen 200, 202 möglich.

In Verfahrensschritt 100 wird mittels des Signalgenerators 16,28 ein aufeinander abgestimmtes, insbesondere zeitgleiches, erstes Laufzeitsignal S1 und zweites Laufzeitsignals S2 erzeugt und zur Aussendung vorbereitet, d.h. an eine entsprechende Aussendevorrichtung übergeben.

In Verfahrensschritt 102 wird das erste Laufzeitsignals S1 in Form eines auf den Begrenzungsleiter 12a,24 eingespeisten Stroms 18a,30, insbesondere Stromsignals, ausgesendet, wobei ein elektromagnetisches Wechselfeld 20a,32 erzeugt wird.

In Verfahrensschritt 104, der insbesondere zeitgleich zu Verfahrensschritt 102 durchgeführt werden kann, wird das zweite Laufzeitsignals S2 ausgesendet. Die Aussendung des zweiten Laufzeitsignals S2 kann dabei - wie in Figur 1 dargestellt - unter Verwendung eines weiteren, den definierten Bereich 14 umgebenden, Begrenzungsleiter 12b in Form eines auf den weiteren Begrenzungsleiter 12b eingespeisten weiteren Stroms 18b, insbesondere weiteren Stromsignals, erfolgen, wobei ein weiteres elektromagnetisches Wechselfeld 20b erzeugt wird. Dabei wird die Umlaufrichtung 22a des auf den Begrenzungsleiter eingespeisten ersten Laufzeitsignals S1, insbesondere entsprechend der Fließrichtung des Stroms 18a, entgegengesetzt zur Umlaufrichtung 22b des auf den weiteren Begrenzungsleiter 12b eingespeisten zweiten Laufzeitsignals S2, insbesondere entsprechend der Fließrichtung des Stroms 18b, gewählt.

Alternativ oder zusätzlich kann die Aussendung des zweiten Laufzeitsignals S2 in Verfahrensschritt 104 auch - wie in Figur 2 dargestellt - mittels der Aussendung eines entsprechenden Funksignals 54 unter Verwendung der Antenne 36 des Signalgenerators 28 erfolgen. Die Antenne kann dabei insbesondere auch als eine vom Signalgenerator 28 unabhängige, allerdings mit diesem gekoppelte Antenne 36 realisiert sein. Das zweite Laufzeitsignal S2 in Form eines Funksignals 54 wird dabei als ein Dauerstrichradarsignal, insbesondere als ein frequenzmoduliertes Dauerstrichradarsignal, erzeugt. Alternativ ist eine Erzeugung des Funksignals 54 als ein Impulsradarsignal denkbar. Ferner kann das Funksignals 54 als ein anderweitiges, einem Fachmann geläufiges Funksignal realisiert sein.

In Verfahrensschritt 106 wird das Eintreffen des ersten Laufzeitsignals S1 bei dem Roboterfahrzeug 10,10a in Folge einer Detektion einer von dem Laufzeitsignal S1 hervorgerufenen elektromagnetischen Feldänderung, die auf das erzeugte elektromagnetische Wechselfeld 20a zurückgeht, detektiert. Die Detektion erfolgt dabei mittels der Detektoreinheit 40,50.

In Verfahrensschritt 108 wird das Eintreffen des zweiten Laufzeitsignals S2 bei dem Roboterfahrzeug 10,10a detektiert. Bei dem in Figur 1 dargestellten System 200, umfassend das in Figur 3 dargestellte Roboterfahrzeug 10, kann das Eintreffen des zweiten Laufzeitsignals S2 bei dem Roboterfahrzeug 10 mittels der Detektoreinheit 40 in Folge einer Detektion einer von dem zweiten Laufzeitsignal S2 hervorgerufenen weiteren elektromagnetischen Feldänderung, die auf das erzeugte weitere elektromagnetische Wechselfeld 20b zurückgeht, detektiert werden.

Alternativ oder zusätzlich kann das Eintreffen des zweiten Laufzeitsignals S2 bei dem Roboterfahrzeug, wie in dem in Figur 2 dargestellten System 202 umfassend das in Figur 4 dargestellte Roboterfahrzeug 10a realisiert, mittels einer zweiten Detektoreinheit 52 in Folge einer Detektion einer von dem zweiten Laufzeitsignal S2 hervorgerufenen elektromagnetischen Welle, insbesondere des Funksignals 54, detektiert werden.

Es sei angemerkt, dass die Verfahrensschritt 106 und 108 in prinzipiell beliebiger Reihenfolge durchlaufen werden können, jenachdem welches Laufzeitsignal S1,S2 zuerst bei dem Roboterfahrzeug 10,10a eintrifft, oder auch gleichzeitig durchlaufen werden können. Insbesondere befindet sich das Roboterfahrzeug 10,10a zumindest bis zum Detektieren des Eintreffens beider Laufzeitsignale S1,S2 in einem Detektionsmodus ("Horch-Modus").

In Verfahrensschritt 110 wird anschließend eine Zeitverzögerung (insbesondere t2-t1) zwischen dem Eintreffen des ersten Laufzeitsignals S1 und dem Eintreffen des zweiten Laufzeitsignals S2 ermittelt. Dabei kann die Ermittlung der Zeitverzögerung durch Differenzbildung zweier ermittelter absoluter Zeitpunkte t1,t2 eines Eintreffens der Laufzeitsignale S1,S2 durchgeführt werden. Alternativ kann die Ermittlung der Zeitverzögerung auch als relative Zeitverzögerung ohne Bestimmung zweier absoluter Zeitpunkte t1,t2 erfolgen, beispielsweise im Rahmen einer Bestimmung einer Phasenverschiebung.

In Verfahrensschritt 112 wird die Position des Roboterfahrzeugs 10,10a entlang des Begrenzungsleiters 12a,12b,24 abhängig von der ermittelten Zeitverzögerung durch Ermittlung einer zu der Zeitverzögerung in einer geräteintern bereitgestellten Zuordnungstabelle hinterlegten Position bestimmt.

Die Position des Roboterfahrzeugs 10,10a wird in Verfahrensschritt 114 zur weiteren Verarbeitung, insbesondere im Rahmen einer Steuerung des Roboterfahrzeugs 10,10a, an die Steuervorrichtung 44 und/oder an die Antriebseinheit 46 weitergeleitet.

Das erfindungsgemäße Verfahren wird vorzugsweise wiederholt, insbesondere kontinuierlich oder quasi-kontinuierlich, durchgeführt, wie in Figur 5 durch den Pfeil 116 dargestellt.

## Patentansprüche

1. Verfahren zum Erkennen einer Position eines mobilen, insbesondere autonomen, Roboterfahrzeugs (10,10a) entlang eines, einen definierten Bereich (14,26) umgebenden, Begrenzungsleiters (12a,12b,24), aufweisend zumindest die Verfahrensschritte
- Aussenden eines ersten Laufzeitsignals S1 in Form eines auf den Begrenzungsleiter (12a,24) eingespeisten Stromsignals, wobei ein elektromagnetisches Wechselfeld (20a,32) erzeugt wird,
- Detektieren eines Eintreffens des ersten Laufzeitsignals S1 bei dem Roboterfahrzeug (10,10a), insbesondere in Folge einer Detektion einer von dem Laufzeitsignal S1 hervorgerufenen elektromagnetischen Feldänderung, die auf das erzeugte elektromagnetische Wechselfeld (20a,32) zurückgeht,
- Aussenden eines zweiten Laufzeitsignals S2,
- Detektieren eines Eintreffens des zweiten Laufzeitsignals S2 bei dem Roboterfahrzeug (10,10a), **gekennzeichnet durch** die Verfahrensschritte
- Ermitteln einer Zeitverzögerung zwischen dem Eintreffen des ersten Laufzeitsignals S1 und dem Eintreffen des zweiten Laufzeitsignals S2,
- Ermitteln der Position des Roboterfahrzeugs (10,10a) entlang des Begrenzungsleiters (12a,12b,24) abhängig von der ermittelten Zeitverzögerung.

2. Verfahren nach Anspruch 1, wobei das erste Laufzeitsignal S1 und das zweite Laufzeitsignal S2 von einem Signalgenerator (16,28) zur Erzeugung eines Laufzeitsignals erzeugt werden.

3. Verfahren nach einem der vorhergehenden Ansprüche, wobei das zweite Laufzeitsignal S2 unter Verwendung eines weiteren, den definierten Bereich (14) umgebenden, Begrenzungsleiters (12b) in Form eines auf den weiteren Begrenzungsleiter (12b) eingespeisten weiteren Stromsignals ausgesendet wird, wobei ein weiteres elektromagnetisches Wechselfeld (20b) erzeugt wird, wobei das Eintreffen des zweiten Laufzeitsignals S2 bei dem Roboterfahrzeug (10) detektiert wird, insbesondere in Folge einer Detektion einer von dem zweiten Laufzeitsignal S2 hervorgerufenen weiteren elektromagnetischen Feldänderung, die auf das erzeugte weitere elektromagnetische Wechselfeld (20b) zurückgeht, detektiert wird.

4. Verfahren nach Anspruch 3, wobei die Umlaufrichtung (22a) des auf den Begrenzungsleiter (12a) eingespeisten ersten Laufzeitsignals S1 entgegengesetzt zur Umlaufrichtung (22b) des auf den weiteren Begrenzungsleiter (12b) eingespeisten zweiten Laufzeitsignals S2 ist.

5. Verfahren nach einem der vorhergehenden Ansprüche 1-2, wobei das zweite Laufzeitsignal S2 als ein Funksignal (54) ausgesendet wird, wobei das Eintreffen des zweiten Laufzeitsignals S2 bei dem Roboterfahrzeug (10a) insbesondere in Folge einer Detektion einer von dem zweiten Laufzeitsignal S2 hervorgerufenen elektromagnetischen Welle detektiert wird.

6. Verfahren nach Anspruch 5, wobei das zweite Laufzeitsignal S2 als ein Dauerstrichradarsignal, insbesondere als ein frequenzmoduliertes Dauerstrichradarsignal, erzeugt wird oder als ein Impulsradarsignal erzeugt wird.

7. Verfahren nach einem der vorhergehenden Ansprüche, wobei das erste Laufzeitsignal S1 und/oder das zweite Laufzeitsignal S2 als Sinus-Signalfolge erzeugt werden/wird, wobei eine Frequenz und/oder eine Amplituden der Sinus-Signalfolge derart vorgesehen wird, insbesondere eingestellt wird, dass eine erforderliche Auflösung der Position und/oder eine erforderliche Übertragungsreichweite des ersten Laufzeitsignals S1 und des zweiten Laufzeitsignals S2 erreicht werden.

8. Verfahren nach einem der vorhergehenden Ansprüche, wobei die Position des Roboterfahrzeugs (10,10a) entlang des Begrenzungsleiters (12a,12b,24) ermittelt wird, indem eine zu der ermittelten Zeitverzögerung in einer Zuordnungstabelle hinterlegte Position ermittelt wird.

9. Mobiles, insbesondere autonomes, Roboterfahrzeug (10,10a), das seine Position entlang zumindest eines, einen definierten Bereich (14,26) umgebenden, Begrenzungsleiters (12a,12b,24) nach einem Verfahren gemäß einem der Ansprüche 1-8, erkennt, aufweisend zumindest:
- eine erste Detektoreinheit (40,50) zum Detektieren eines Eintreffens eines ersten Laufzeitsignals S1, insbesondere in Folge einer Detektion einer von dem ersten Laufzeitsignal S1 hervorgerufenen elektromagnetischen Feldänderung, erzeugt durch ein in einem Begrenzungsleiter (12a,24) eingespeistes Stromsignal,
- eine zweite Detektoreinheit (40,50,52) zum Detektieren eines Eintreffens eines zweiten Laufzeitsignals S2, **gekennzeichnet durch**
- eine Auswerteeinheit (42), die dazu eingerichtet ist, eine Zeitverzögerung zwischen dem Eintreffen des ersten Laufzeitsignals S1 und dem Eintreffen des zweiten Laufzeitsignals S2zu ermitteln und aus der Zeitverzögerung eine Position entlang des zumindest einen Begrenzungsleiters (12a,12b,24) zu ermitteln.

10. Mobiles, insbesondere autonomes, Roboterfahrzeug (10,10a) nach Anspruch 9, wobei die zweite Detektoreinheit (40) zum Detektieren des Eintreffens des zweiten Laufzeitsignals S2 in Folge einer Detektion einer von dem zweiten Laufzeitsignal S2 hervorgerufenen elektromagnetischen Feldänderung, erzeugt durch ein in einem Begrenzungsleiter (12b) eingespeistes Stromsignal, vorgesehen ist.

11. Mobiles, insbesondere autonomes, Roboterfahrzeug (10,10a) nach Anspruch 9, wobei die zweite Detektoreinheit (52) zum Detektieren des Eintreffens des zweiten Laufzeitsignals S2 in Folge einer Detektion einer von dem zweiten Laufzeitsignal S2 hervorgerufenen elektromagnetischen Welle, erzeugt durch ein Funksignal (54), vorgesehen ist.

12. Mobiles, insbesondere autonomes, Roboterfahrzeug (10,10a), das seine Position entlang zumindest eines, einen definierten Bereich (14,26) umgebenden, Begrenzungsleiters (12a,12b,24) nach einem Verfahren gemäß einem der Ansprüche 1-8, erkennt, aufweisend zumindest:
- eine Detektoreinheit (40) zum Detektieren eines überlagerten Mischsignals aus einem ersten Laufzeitsignals S1 und einem zweiten Laufzeitsignal S2, insbesondere in Folge einer Detektion einer von dem ersten Laufzeitsignal S1 und dem zweiten Laufzeitsignal S2 hervorgerufenen überlagerten elektromagnetischen Feldänderung, erzeugt durch jeweils ein in einem Begrenzungsleiter (12a,12b) eingespeistes Stromsignal,
- eine Auswerteeinheit (42), die dazu eingerichtet ist, aus dem überlagerten Mischsignal eine Zeitverzögerung zwischen den Laufzeitsignalen S1 und S2, insbesondere zwischen einem Eintreffen des ersten Laufzeitsignals S1 und einem Eintreffen des zweiten Laufzeitsignals S2, zu ermitteln und aus der Zeitverzögerung eine Position entlang des zumindest einen Begrenzungsleiters (12a,12b) zu ermitteln.

13. System (200,202) zur Durchführung des Verfahrens nach einem der Ansprüche 1-8, insbesondere zum Erkennen einer Position entlang eines einen definierten Bereich umgebenden Begrenzungsleiters (12a,12b,24), das zumindest umfasst:
- einen Begrenzungsleiter (12a,12b,24),
- ein mobiles Roboterfahrzeug (10,10a) nach einem der Ansprüche 9-12 und
- einen Signalgenerator (16,28) zur Erzeugung eines ersten Laufzeitsignals S1 sowie zur Erzeugung eines zweiten Laufzeitsignals S2.

14. System (200,202) nach Anspruch 13, wobei der Signalgenerator dazu vorgesehen ist,
- das erste Laufzeitsignal S1 durch Einspeisen eines Stromsignals auf den Begrenzungsleiter (12a,24) auszusenden und das zweite Laufzeitsignal S2 durch Einspeisen eines weiteren Stromsignals auf einen weiteren, den definierten Bereich (14) umgebenden, Begrenzungsleiter (12b) auszusenden oder
- das erste Laufzeitsignal S1 durch Einspeisen eines Stromsignals auf den Begrenzungsleiter (24) auszusenden und das zweite Laufzeitsignal S2 als ein Funksignal (54) auszusenden.

## Claims

1. Method for detecting a position of a mobile, in particular autonomous, robot vehicle (10, 10a) along a boundary conductor (12a, 12b, 24) surrounding a defined area (14, 26), having at least the method steps of
- transmitting a first runtime signal S1 in the form of a current signal supplied to the boundary conductor (12a, 24), with an electromagnetic alternating field (20a, 32) being generated,
- detecting an arrival of the first runtime signal S1 at the robot vehicle (10, 10a), in particular as a result of a detection of an electromagnetic field change, caused by the runtime signal S1, that stems from the generated electromagnetic alternating field (20a, 32),
- transmitting a second runtime signal S2,
- detecting an arrival of the second runtime signal S2 at the robot vehicle (10, 10a),
**characterized by** the method steps of
- determining a time delay between the arrival of the first runtime signal S1 and the arrival of the second runtime signal S2,
- determining the position of the robot vehicle (10, 10a) along the boundary conductor (12a, 12b, 24) on the basis of the determined time delay.

2. Method according to Claim 1, wherein the first runtime signal S1 and the second runtime signal S2 are generated by a signal generator (16, 28) for generating a runtime signal.

3. Method according to either of the preceding claims, wherein the second runtime signal S2 is transmitted, by using a further boundary conductor (12b) surrounding the defined area (14), in the form of a further current signal supplied to the further boundary conductor (12b), wherein a further electromagnetic alternating field (20b) is generated, the arrival of the second runtime signal S2 at the robot vehicle (10) being detected in particular as a result of a detection of a further electromagnetic field change, caused by the second runtime signal S2, that stems from the generated further electromagnetic alternating field (20b).

4. Method according to Claim 3, wherein the direction of circulation (22a) of the first runtime signal S1 supplied to the boundary conductor (12a) is the opposite of the direction of circulation (22b) of the second runtime signal S2 supplied to the further boundary conductor (12b).

5. Method according to either of preceding Claims 1 and 2, wherein the second runtime signal S2 is transmitted as a radio signal (54), the arrival of the second runtime signal S2 at the robot vehicle (10a) being detected in particular as a result of a detection of an electromagnetic wave caused by the second runtime signal S2.

6. Method according to Claim 5, wherein the second runtime signal S2 is generated as a continuous wave radar signal, in particular as a frequency-modulated continuous wave radar signal, or is generated as an impulse radar signal.

7. Method according to one of the preceding claims, wherein the first runtime signal S1 and/or the second runtime signal S2 is/are generated as a sinusoidal signal sequence, with a frequency and/or an amplitude of the sinusoidal signal sequence being provided, in particular set, such that a required resolution of the position and/or a required transmission range of the first runtime signal S1 and of the second runtime signal S2 are achieved.

8. Method according to one of the preceding claims, wherein the position of the robot vehicle (10, 10a) along the boundary conductor (12a, 12b, 24) is determined by determining a position stored for the determined time delay in an association table.

9. Mobile, in particular autonomous, robot vehicle (10, 10a) that detects its position along at least one boundary conductor (12a, 12b, 24) surrounding a defined area (14, 26) using a method according to one of Claims 1-8, having at least:
- a first detector unit (40, 50) for detecting an arrival of a first runtime signal S1, in particular as a result of a detection of an electromagnetic field change caused by the first runtime signal S1, generated by a current signal supplied in a boundary conductor (12a, 24),
- a second detector unit (40, 50, 52) for detecting an arrival of a second runtime signal S2,
**characterized by**
- an evaluation unit (42) designed to determine a time delay between the arrival of the first runtime signal S1 and the arrival of the second runtime signal S2 and to determine a position along the at least one boundary conductor (12a, 12b, 24) from the time delay.

10. Mobile, in particular autonomous, robot vehicle (10, 10a) according to Claim 9, wherein the second detector unit (40) is intended to detect the arrival of the second runtime signal S2, as a result of a detection of an electromagnetic field change caused by the second runtime signal S2, generated by a current signal supplied in a boundary conductor (12b).

11. Mobile, in particular autonomous, robot vehicle (10, 10a) according to Claim 9, wherein the second detector unit (52) is intended to detect the arrival of the second runtime signal S2, as a result of a detection of an electromagnetic wave caused by the second runtime signal S2, generated by a radio signal (54) .

12. Mobile, in particular autonomous, robot vehicle (10, 10a) that detects its position along at least one boundary conductor (12a, 12b, 24) surrounding a defined area (14, 26) using a method according to one of Claims 1-8, having at least:
- a detector unit (40) for detecting an overlaid mix signal comprising a first runtime signal S1 and a second runtime signal S2, in particular as a result of a detection of an overlaid electromagnetic field change caused by the first runtime signal S1 and the second runtime signal S2, generated by a respective current signal supplied in a boundary conductor (12a, 12b),
- an evaluation unit (42) designed to determine from the overlaid mix signal a time delay between the runtime signals S1 and S2, in particular between an arrival of the first runtime signal S1 and an arrival of the second runtime signal S2, and to determine a position along the at least one boundary conductor (12a, 12b) from the time delay.

13. System (200, 202) for carrying out the method according to one of Claims 1-8, in particular for detecting a position along a boundary conductor (12a, 12b, 24) surrounding a defined area, comprising at least:
- a boundary conductor (12a, 12b, 24),
- a mobile robot vehicle (10a, 10b) according to one of Claims 9-12, and
- a signal generator (16, 28) for generating a first runtime signal S1 and for generating a second runtime signal S2.

14. System (200, 202) according to Claim 13, wherein the signal generator is intended
- to transmit the first runtime signal S1 by supplying a current signal to the boundary conductor (12a, 24) and to transmit the second runtime signal S2 by supplying a further current signal to a further boundary conductor (12b) surrounding the defined area (14), or
- to transmit the first runtime signal S1 by supplying a current signal to the boundary conductor (24) and to transmit the second runtime signal S2 as a radio signal (54).

## Revendications

1. Procédé de reconnaissance d'une position d'un véhicule robot mobile (10, 10a), en particulier autonome, le long d'un conducteur de délimitation (12a, 12b, 24) entourant une zone définie (14, 26), présentant au moins les étapes de procédé consistant à
- émettre un premier signal de temps de propagation S1 sous la forme d'un signal de courant injecté sur le conducteur de délimitation (12a, 24) ce qui produit un champ électromagnétique alternatif (20a, 32),
- détecter une arrivée du premier signal de temps de propagation S1 au véhicule robot (10, 10a), en particulier suite à une détection d'un changement de champ électromagnétique provoqué par le signal de temps de propagation S1 qui provient du champ électromagnétique alternatif (20a, 32) produit,
- émettre un deuxième signal de temps de propagation S2,
- détecter une arrivée du deuxième signal de temps de propagation S2 au véhicule robot (10, 10a), **caractérisé par** les étapes de procédé consistant à
- déterminer une temporisation entre l'arrivée du premier signal de temps de propagation S1 et l'arrivée du deuxième signal de temps de propagation S2,
- déterminer la position du véhicule robot (10, 10a) le long du conducteur de délimitation (12a, 12b, 24) en fonction de la temporisation déterminée.

2. Procédé selon la revendication 1, dans lequel le premier signal de temps de propagation S1 et le deuxième signal de temps de propagation S2 sont produits par un générateur de signaux (16, 28) destiné à produire un signal de temps de propagation.

3. Procédé selon l'une quelconque des revendications précédentes, dans lequel le deuxième signal de temps de propagation S2 est émis en utilisant un autre conducteur de délimitation (12b) entourant la zone définie (14) sous la forme d'un autre signal de courant injecté sur l'autre conducteur de délimitation (12b), ce qui produit un autre champ électromagnétique alternatif (20b), l'arrivée du deuxième signal de temps de propagation S2 au véhicule robot (10) étant détectée, en particulier suite à une détection d'un autre changement de champ électromagnétique provoqué par le deuxième signal de temps de propagation S2 qui provient de l'autre champ électromagnétique alternatif produit (20b).

4. Procédé selon la revendication 3, dans lequel le sens de circulation (22a) du premier signal de temps de propagation S1 injecté sur le conducteur de délimitation (12a) est opposé au sens de circulation (22b) du deuxième signal de temps de propagation S2 injecté sur l'autre conducteur de délimitation (12b).

5. Procédé selon l'une quelconque des revendications précédentes 1 à 2, dans lequel le deuxième signal de temps de propagation S2 est émis sous la forme d'un signal radio (54), l'arrivée du deuxième signal de temps de propagation S2 au véhicule robot (10a) étant détectée, en particulier suite à une détection d'une onde électromagnétique provoquée par le deuxième signal de temps de propagation S2.

6. Procédé selon la revendication 5, dans lequel le deuxième signal de temps de propagation S2 est produit sous la forme d'un signal radar à onde continue, en particulier sous la forme d'un signal radar à onde continue, modulé en fréquence, ou est produit sous la forme d'un signal radar à ondes par rafales.

7. Procédé selon l'une quelconque des revendications précédentes, dans lequel le premier signal de temps de propagation S1 et/ou le deuxième signal de temps de propagation S2 est/sont produit(s) sous la forme d'une séquence de signaux sinusoïdaux, une fréquence et/ou une amplitude de la séquence de signaux sinusoïdaux étant prévue, en particulier réglée, de telle sorte qu'une résolution nécessaire de la position et/ou une portée de transmission nécessaire du premier signal de temps de propagation S1 et du deuxième signal de temps de propagation S2 est/sont atteinte(s).

8. Procédé selon l'une quelconque des revendications précédentes, dans lequel la position du véhicule robot (10, 10a) le long du conducteur de délimitation (12a, 12b, 24) est déterminée en déterminant une position enregistrée dans une table de correspondances pour la temporisation déterminée.

9. Véhicule robot mobile (10, 10a), en particulier autonome, qui reconnaît sa position le long d'au moins un conducteur de délimitation (12a, 12b, 24) entourant une zone définie (14, 26) selon un procédé selon l'une quelconque des revendications 1 à 8, présentant au moins :
- une première unité de détection (40, 50) destinée à détecter une arrivée d'un premier signal de temps de propagation S1, en particulier suite à une détection d'un changement de champ électromagnétique provoqué par le premier signal de temps de propagation S1, produit par un signal de courant injecté dans un conducteur de délimitation (12a, 24),
- une deuxième unité de détection (40, 50, 52) destinée à détecter une arrivée d'un deuxième signal de temps de propagation S2,
**caractérisé par**
- une unité d'évaluation (42) qui est aménagée pour déterminer une temporisation entre l'arrivée du premier signal de temps de propagation S1 et l'arrivée du deuxième signal de temps de propagation S2, et pour déterminer à partir de la temporisation une position le long de l'au moins un conducteur de délimitation (12a, 12b, 24).

10. Véhicule robot mobile (10, 10a), en particulier autonome, selon la revendication 9, dans lequel la deuxième unité de détection (40) est prévue pour détecter l'arrivée du deuxième signal de temps de propagation S2 suite à une détection d'un changement de champ électromagnétique provoqué par le deuxième signal de temps de propagation S2, produit par un signal de courant injecté dans un conducteur de délimitation (12b) .

11. Véhicule robot mobile (10, 10a), en particulier autonome, selon la revendication 9, dans lequel la deuxième unité de détection (52) est prévue pour détecter l'arrivée du deuxième signal de temps de propagation S2 suite à une détection d'une onde électromagnétique provoquée par le deuxième signal de temps de propagation S2, produite par un signal radio (54) .

12. Véhicule robot mobile (10, 10a), en particulier autonome, qui reconnaît sa position le long d'au moins un conducteur de délimitation (12a, 12b, 24) entourant une zone définie (14, 26) selon un procédé selon l'une quelconque des revendications 1 à 8, présentant au moins :
- une unité de détection (40) destinée à détecter un signal mixte superposé, composé d'un premier signal de temps de propagation S1 et d'un deuxième signal de temps de propagation S2, en particulier suite à une détection d'un changement de champ électromagnétique superposé provoqué par le premier signal de temps de propagation S1 et le deuxième signal de temps de propagation S2, produit respectivement par un signal de courant injecté dans un conducteur de délimitation (12a, 12b),
- une unité d'évaluation (42) qui est aménagée pour déterminer à partir du signal mixte superposé une temporisation entre les signaux de temps de propagation S1 et S2, en particulier entre une arrivée du premier signal de temps de propagation S1 et une arrivée du deuxième signal de temps de propagation S2, et pour déterminer à partir de la temporisation une position le long de l'au moins un conducteur de délimitation (12a, 12b).

13. Système (200, 202) permettant d'effectuer le procédé selon l'une quelconque des revendications 1 à 8, en particulier pour reconnaître une position le long d'un conducteur de délimitation (12a, 12b, 24) entourant une zone définie, comprenant au moins :
- un conducteur de délimitation (12a, 12b, 24),
- un véhicule robot mobile (10, 10a) selon l'une quelconque des revendications 9 à 12, et
- un générateur de signaux (16, 28) pour produire un premier signal de temps de propagation S1 ainsi que pour produire un deuxième signal de temps de propagation S2.

14. Système (200, 202) selon la revendication 13, dans lequel le générateur de signaux est prévu pour
- émettre le premier signal de temps de propagation S1 par l'injection d'un signal de courant sur le conducteur de délimitation (12a, 24) et pour émettre le deuxième signal de temps de propagation S2 par l'injection d'un autre signal de courant sur un autre conducteur de délimitation (12b) entourant la zone définie (14), ou
- émettre le premier signal de temps de propagation S1 par l'injection d'un signal de courant sur le conducteur de délimitation (24) et pour émettre le deuxième signal de temps de propagation S2 sous la forme d'un signal radio (54).
